# EUROPÄISCHE PATENTANMELDUNG

(11) **EP 4 769 858 A1**
(43) Veröffentlichungstag der Anmeldung: **01.07.2026**
(21) Anmeldenummer: 25224354.8
(22) Anmeldetag: 17.12.2025
(51) Int. Cl.: H02H 3/04, H02H 9/04, H01T 1/14

(54) **ÜBERWACHUNGSMODUL UND ÜBERSPANNUNGSSCHUTZSYSTEM ZUR ÜBERWACHUNG EINES ÜBERSPANNUNGSSCHUTZMODULS**

(30) Priorität: 19.12.2024 DE 102024139115
(71) Anmelder: DEHN SE, 92318 Neumarkt i.d. OPf. (DE)
(72) Erfinder: Brocke, Ralph, 92318 Neumarkt i.d.OPf. (DE); Böhm, Thomas, 92318 Neumarkt i.d.OPf. (DE); Zäuner, Edmund, 92318 Neumarkt i.d.OPf. (DE); Stehle, Michael, 92318 Neumarkt i.d.OPf. (DE)
(74) Vertreter: Prinz & Partner mbB

(57) **Zusammenfassung**

Die Erfindung betrifft ein Überwachungsmodul (16) zur Überwachung eines Überspannungsschutzmoduls (21). Das Überwachungsmodul (16) weist einen ersten Anschluss (18) und einen zweiten Anschluss (20) für das Überspannungsschutzmodul (21) auf. Das Überwachungsmodul (16) hat einen Überlastschutz (22), der mit dem ersten Anschluss (18) über eine Leitung (26) verbunden und über den ersten Anschluss (18) mit dem Überspannungsschutzmodul (21) in Reihe schaltbar ist. Das Überwachungsmodul (16) umfasst eine Brückenschaltung (28) zur Spannungserfassung. Das Überwachungsmodul (16) weist eine Auswerteeinheit (30) auf, die über einen Abgriff (29) der Brückenschaltung (28) mit der Leitung (26) verbunden ist, um einen Spannungsabfall über den Überlastschutz (22) und/oder einen Spannungsabfall zwischen dem ersten Anschluss (18) und dem zweiten Anschluss (20) zu erfassen und auszuwerten. Ferner ist ein Überspannungsschutzsystem (10) beschrieben.

## Beschreibung

Die Erfindung betrifft ein Überwachungsmodul zur Überwachung eines Überspannungsschutzmoduls, insbesondere zur Detektion einer Degradation eines Überspannungsschutzmoduls. Ferner betrifft die Erfindung ein Überspannungsschutzsystem.

Überspannungsschutzmodule zum Überspannungsschutz sind aus dem Stand der Technik bekannt und werden in vielseitigen Gebieten eingesetzt. Ein Hauptanwendungsgebiet für den Überspannungsschutz, bei dem derartige Überspannungsschutzmodule verwendet werden, ist an Einspeisepunkten elektrischer Energie in Gebäuden oder bei verzweigten Energieverteilungen.

Die Überspannungsschutzmodule werden beispielsweise in separat ausgebildeten Überspannungsschutzgeräte eingesetzt, die auch als "surge protection device" (SPD) bezeichnet werden. Die Überspannungsschutzmodule funktionieren grundsätzlich derart, dass sie im Falle einer transienten oder temporären Überspannung niederohmig werden, um die Energie eines Überspannungsimpulses abzuleiten. Überlast und Betriebszustände außerhalb der spezifizierten Nenndaten der Überspannungsschutzmodule können ein Versagen der Überspannungsschutzmodule zur Folge haben. In der Regel führt das Versagen eines Überspannungsschutzmoduls zu einem permanenten niederohmigen Verhalten, sodass vorgeschaltete Schutzorgane ("Over Current Protection" - OCP) wie Sicherungen oder Leitungsschutzschalter ("Miniatur Circuit Breaker" - MCB) auslösen. Zur Vermeidung des kompletten Spannungsausfalls durch Überstromabschaltung in der Energieverteilung werden bei Bedarf zusätzliche (Vor-)Sicherungen hinter der Verzweigung zum Überspannungsschutzmodul angeordnet.

Die Dimensionierung dieser (Vor-)Sicherungen ist jedoch kompliziert, da zwei Kriterien erfüllt sein müssen, die die richtige Dimensionierung erschweren. Einerseits dürfen die (Vor-)Sicherungen nicht zu klein dimensioniert werden, damit Impulsströme nicht zur Auslösung führen, und andererseits dürfen die jeweiligen (Vor-)Sicherungen nicht zu groß dimensioniert werden, um die Zerstörung eines defekten Überspannungsschutzmoduls durch hohe thermische Belastung zu vermeiden. Grundsätzlich sind derartige (Vor-)Sicherungen vorgesehen, um bei Strömen im Kiloampere-Bereich auszulösen.

Die Überspannungsschutzmodule weisen Überspannungsschutzelemente auf, welche je nach Einsatz- bzw. Anwendungsgebiet unterschiedlich ausgebildet sein können. Bei den Überspannungsschutzelementen handelt es sich beispielsweise um (Metalloxid-)Varistoren (MOV) für den Typ 2 und 3 des Überspannungsschutzes, wohingegen für den Typ 1 des Überspannungsschutzes typischerweise Gasableiter oder Funkenstrecken als Überspannungsschutzelemente zum Einsatz kommen. Die jeweiligen Überspannungsschutzelemente der Überspannungsschutzmodule können mit der Zeit jedoch degradieren, also Alterungseffekten unterliegen, wodurch unter anderem ein Leckstrom entsteht bzw. sich der Spannungsabfall über das Überspannungsschutzmodul verändert. Die Degradation hat also zur Folge, dass das Überspannungsschutzmodul, welches in einem Auslieferungs- bzw. Neuzustand einen hohen elektrischen Innenwiderstand bei Betrieb an Netzspannung aufweist, einen geringeren elektrischen Innenwiderstand aufgrund der Degradierung hat. Der abnehmende elektrische Widerstand führt im Überspannungsschutzmodul zu ansteigender Verlustleistung, die wiederum die Degradation des Überspannungsschutzelements beschleunigen kann. In der Folge kann eine thermische Zerstörung auftreten, sog. Thermisches Durchgehen ("thermal runaway").

Diesem Degradationseffekt des Überspannungsschutzmoduls, insbesondere der Überspannungsschutzelemente, wird heutzutage typischerweise damit begegnet, dass eine (thermische) Abtrennvorrichtung vorgesehen ist, welche ein langsames Altern des Überspannungsschutzmoduls, insbesondere eines überspannungsbegrenzenden Schutzelements (Überspannungsschutzelement), detektiert und die damit einhergehenden geringen Leckströme abschaltet, also Ströme in der Größenordnung von Milliampere bis zu zweistelligen Ampere.

Der Nutzer erhält bei ansteigendem Leckstrom durch das degradierende Überspannungsschutzelement erst Erkenntnis, nachdem die (thermische) Abtrennvorrichtung abgetrennt oder die (Vor-)Sicherung ausgelöst hat. Dies ist jedoch insofern nicht unbedeutend, da die (thermische) Abtrennvorrichtung für Ströme in der Größenordnung von Milliampere bis zu zweistelligen Ampere vorgesehen ist, wohingegen die (Vor-)Sicherung erst im Kiloampere-Bereich auslöst. Das Überspannungsschutzmodul ist nach Auslösen dieser Organe nicht mehr funktionstüchtig, was zur Folge hat, dass die elektrische Anlage bis zum Austausch des Überspannungsschutzmoduls nicht mehr gegen Überspannungen geschützt ist. Daher werden heutzutage zusätzlich sogenannte Überwachungssysteme ("Monitoring Systeme") eingesetzt, die den Nutzer über den aktuellen Zustand des Überspannungsschutzmoduls informieren, insbesondere dessen Degradation. Die aus dem Stand der Technik bekannten Lösungen sind jedoch aufwendig bzw. technisch komplex und verursachen daher hohe Kosten.

Die Aufgabe der Erfindung ist es, eine kostengünstige und einfach zu realisierende Möglichkeit bereitzustellen, ein Überspannungsschutzmodul zu überwachen, um einen Degradationsgrad des Überspannungsschutzmoduls zu ermitteln, sodass dieses sicher abgeschaltet werden kann.

Die Aufgabe wird erfindungsgemäß gelöst durch ein Überwachungsmodul zur Überwachung eines Überspannungsschutzmoduls. Das Überwachungsmodul weist einen ersten Anschluss und einen zweiten Anschluss für das Überspannungsschutzmodul auf. Das Überwachungsmodul hat einen Überlastschutz, der mit dem ersten Anschluss über eine Leitung verbunden und über den ersten Anschluss mit dem Überspannungsschutzmodul in Reihe schaltbar ist. Das Überwachungsmodul umfasst eine Brückenschaltung zur Spannungserfassung. Das Überwachungsmodul weist eine Auswerteeinheit auf, die über einen Abgriff der Brückenschaltung mit der Leitung verbunden ist, um einen Spannungsabfall über den Überlastschutz und/oder einen Spannungsabfall zwischen dem ersten Anschluss und dem zweiten Anschluss zu erfassen und auszuwerten.

Die Aufgabe wird ferner gelöst durch ein Überspannungsschutzsystem mit einem Überspannungsschutzmodul und dem Überwachungsmodul der zuvor genannten Art, wobei das Überspannungsschutzmodul mit dem ersten Anschluss und dem zweiten Anschluss verbunden ist. Das Überspannungsschutzmodul ist demnach mit dem Überlastschutz des Überwachungsmoduls in Reihe geschaltet.

Der Grundgedanke der Erfindung ist es, das Überspannungsschutzmodul mithilfe des Überwachungsmoduls zu überwachen, insbesondere den Spannungsabfall über das Überspannungsschutzmodul, was einen Rückschluss auf den Degradationsgrad des Überspannungsschutzmoduls zulässt, also auf das Vorliegen eines etwaigen Leckstroms. Es wird der Spannungsabfall überwacht, der sich in Abhängigkeit vom Degradationsgrad des Überspannungsschutzmoduls entsprechend verändert. Die Degradation des Überspannungsschutzmoduls geht mit einem entsprechenden elektrischen Innenwiderstand des Überspannungsschutzmoduls einher, sodass der Spannungsabfall über das Überspannungsschutzmodul einen Rückschluss auf den elektrischen Innenwiderstand des Überspannungsschutzmoduls zulässt, also die Degradation des Überspannungsschutzmoduls.

Konkret kann der Spannungsabfall zwischen dem ersten Anschluss und dem zweiten Anschluss erfasst werden, mit denen das Überspannungsschutzmodul verbunden ist, sodass direkt der Spannungsabfall über das Überspannungsschutzmodul erfasst werden kann. Der Spannungsabfall zwischen dem ersten Anschluss und dem zweiten Anschluss entspricht also dem Spannungsabfall über das Überspannungsschutzmodul.

Alternativ oder ergänzend kann der Spannungsabfall über den Überlastschutz des Überwachungsmoduls erfasst und ausgewertet werden, worüber auf den Degradationsgrad des Überspannungsschutzmoduls rückgeschlossen werden kann. Mit anderen Worten kann also indirekt der Spannungsabfall über das Überspannungsschutzmodul ermittelt werden, indem der Spannungsabfall über den Überlastschutz erfasst wird, da das Überspannungsschutzmodul mit dem Überlastschutz in Reihe geschaltet ist.

Die Brückenschaltung des Überwachungsmoduls stellt demnach die Spannungsaufteilung über die Reihenschaltung des Überlastschutzes und des Überspannungsschutzmoduls für die Auswerteeinheit bereit, sodass diese von der Auswerteeinheit entsprechend ausgewertet werden können.

Grundsätzlich lässt sich der Spannungsabfall zwischen dem ersten Anschluss und dem zweiten Anschluss des Überwachungsmoduls sowie der Spannungsabfall über den Überlastschutz des Überwachungsmoduls unabhängig von der konkreten Ausgestaltung des Überspannungsschutzmoduls erfassen. Es kann also ein Überspannungsschutzmodul beliebiger Technologie mit einem einfach aufgebauten und kostengünstigen Überwachungsmodul überwacht werden.

Generell handelt es sich bei dem Überwachungsmodul, insbesondere dessen Überlastschutz, um eine (Vor-)Sicherung für das Überspannungsschutzmodul, wobei der Überlastschutz des Überwachungsmoduls und das Überspannungsschutzmodul in Reihe geschaltet sind. Es kann also vorgesehen sein, dass das Überwachungsmodul eine bisher verwendete (Vor-)Sicherung ersetzt. Folglich kann das Überwachungsmodul auch als (Vor-)Sicherung angesehen werden.

Dies ist insofern von Bedeutung, da das Überwachungsmodul auch das eingangs genannte Problem der korrekten Dimensionierung der (Vor-)Sicherung des Überspannungsschutzmoduls löst. Das Überwachungsmodul lässt sich zudem an die unterschiedlichen Technologien der Überspannungsschutzmodule anpassen bzw. entsprechend konfigurieren. Dies geschieht vorzugsweise herstellerseitig.

Die mittels des Überwachungsmoduls mögliche frühzeitige Erkennung einer Degradation des Überspannungsschutzmoduls bietet zudem den Vorteil, etwaige Ausfallzeiten zu reduzieren, da das Überspannungsschutzmodul noch vor dessen Ausfall aufgrund einer zu hohen Degradation bzw. eines Defekts getauscht werden kann.

Da das Überwachungsmodul den Überlastschutz aufweist, welcher beispielsweise als ein kurzschlussstromlöschfähiges und/oder überspannungsschaltendes Bauteil ausgebildet ist, ist das Überwachungsmodul grundsätzlich eingerichtet, einen Fehler und/oder Kurzschlussstrom von einigen Ampere bis zum maximalen Kurzschlussstrom zu löschen bzw. zu unterbrechen.

Hierbei sind die folgenden Fälle zu unterscheiden:
Das Überspannungsschutzmodul ist grundsätzlich intakt. Beim Eintreten einer Überspannung leitet der Überlastschutz den ankommenden Überspannungsimpuls weiter an das nachfolgende Überspannungsschutzmodul. Das Überspannungsschutzmodul leitet die Überspannung dann ordnungsgemäß ab.

Das Überspannungsschutzmodul ist gealtert und/oder defekt. Beim Eintreten einer Überspannung wird der Überspannungsimpuls an das Überspannungsschutzmodul weitergeleitet. Da das Überspannungsschutzmodul gealtert bzw. defekt ist, steigt der Strom an, sodass der Überlastschutz aktiviert wird. Der Überspannungsimpuls wird dabei durch den Überlastschutz gelöscht bzw. abgeleitet.

Wie vorstehend erläutert, kann der Überlastschutz im Falle einer Überspannung simultan mit dem Überspannungsschutzmodul schalten, um einen Impuls- bzw. Stoßstrom abzuleiten.

Der Überlastschutz, also das kurzschlussstromlöschfähige und/oder überspannungsschaltende Bauteil, kommt insbesondere dann zum Tragen, wenn das nachgeschaltete Überspannungsschutzmodul degradiert ist, um beispielsweise einen Folgestrom zu löschen. Sofern das Überspannungsschutzmodul nicht degradiert ist, kann die entsprechende Funktion noch vom Überspannungsschutzmodul übernommen werden, sodass über der Überlastschutz bzw. das kurzschlussstromlöschfähige und/oder überspannungsschaltende Bauteil lediglich ein niederohmiger Pfad für die Impulsstromableitung gegeben ist.

Das Überwachungsmodul stellt nun sicher, dass ein gealtertes Überspannungsschutzmodul, welches aber noch nicht defekt ist, frühzeitig erkannt wird, nämlich im Normalbetrieb bzw. bei einer normalen Betriebsspannung, also wenn kein Überspannungsimpuls vorliegt. Dies erfolgt dadurch, dass der Spannungsabfall über das Überspannungsschutzmodul erfasst wird, insbesondere direkt gemessen oder indirekt ermittelt wird.

Der Überlastschutz ist grundsätzlich kurzschlussstromlöschfähig, überspannungsschaltend und stoßstromtragfähig.

Mit anderen Worten stellt der Überlastschutz also eine stoßstromfeste Sicherung für das nachgeschaltete Überspannungsschutzmodul dar und ermöglicht eine Kurzschlussstromunterbrechung.

Das Überspannungsschutzmodul kann eine Funkenstrecke oder einen Varistor aufweisen, insbesondere einen Metalloxid-Varistor (MOV). Mit anderen Worten kann das Überspannungsschutzmodul auf Funkenstrecken- oder MOV-Basis ausgebildet sein.

Ein Aspekt sieht vor, dass die Auswerteeinheit eingerichtet ist, den Spannungsabfall mit einem Schwellenwert zu vergleichen und/oder eine Degradation des Überspannungsschutzmoduls zu bestimmen. Insofern kann die Auswerteeinheit feststellen, ob der vorliegende Spannungsabfall über den Überlastschutz bzw. über das Überspannungsschutzmodul, also zwischen dem ersten und dem zweiten Anschluss, einen vorbestimmten Schwellenwert erreicht bzw. übersteigt. Sollte dies der Fall sein, so kann ein entsprechender Degradationsgrad des Überspannungsschutzmoduls bestimmt werden. Sofern mehrere Schwellenwerte vorgesehen sind, lässt sich der Degradationsgrad des Überspannungsschutzmoduls entsprechend genau bestimmen.

Der Schwellenwert kann veränderbar sein, wodurch eine Ansprechschwelle eingestellt werden kann.

Ein weiterer Aspekt sieht vor, dass das Überwachungsmodul eine Steuereinheit aufweist, die in Abhängigkeit eines Auswerteergebnisses der Auswerteeinheit einen Auslöseschalter des Überwachungsmoduls aktiv ansteuert. Grundsätzlich kann das Überwachungsmodul und/oder das Überspannungsschutzmodul mittels der Steuereinheit aktiv abgeschaltet werden. Der Auslöseschalter kann in einen leitenden Zustand geschaltet werden, sodass ein Pfad aktiviert wird, über den ein Strom fließen kann. Hierüber kann die Abschaltung bzw. Deaktivierung entsprechend erfolgen. Mit anderen Worten lässt sich das Überwachungsmodul und/oder das Überspannungsschutzmodul gezielt (dauerhaft) deaktivieren, sofern bei der Auswertung festgestellt worden ist, dass das Überspannungsschutzmodul einen gewissen Degradationsgrad erreicht hat.

Insofern bietet das Überwachungsmodul eine Deaktivierungsfunktion.

Die Steuereinheit ist beispielsweise mit der Auswerteeinheit zumindest signalübertragend verbunden, sodass das Auswerteergebnis der Auswerteeinheit an die Steuereinheit übermittelt werden kann, basierend auf dem die aktive Ansteuerung erfolgt.

Auch können die Steuereinheit und die Auswerteeinheit durch ein gemeinsames Steuer- und Auswertemodul ausgebildet sein.

Insbesondere weist das Überwachungsmodul eine Auslöseeinrichtung auf, die auslöst, wenn der Auslöseschalter angesteuert worden ist. Die Auslöseeinrichtung kann eine Sicherung umfassen, die auslöst, wenn der Auslöseschalter angesteuert worden ist, also der zuständige Strompfad aktiviert wurde, sodass ein entsprechender Strom fließen kann. Zusätzlich oder alternativ kann die Auslöseeinrichtung einen Aktor aufweisen.

Der Überlastschutz kann eine Funkenstrecke aufweisen. Insofern handelt es sich bei dem Überlastschutz des Überwachungsmoduls um einen funkenstreckenbasierten und stoßstromtragfähigen Überlastschutz, der ein ausreichendes Löschvermögen aufweist. Wie vorstehend bereits erläutert, ist der Überlastschutz zudem kurzschlussstromlöschfähig und/oder überspannungsschaltend, da die Funkenstrecke zündet, wenn eine entsprechende Überspannung vorliegt. Gegenüber anderen Technologien, beispielsweise einem Draht, weist der derartig ausgebildete Überlastschutz zudem eine lange Lebensdauer auf, da auch länger andauernde Impulsströme, insbesondere der Form "10/350", abgeleitet werden können, also einen Blitzstoßstrom mit der standardisierten Wellenform "10 / 350 µs", was entsprechend lang andauernder als die ansonsten standardisierte Wellenform "8 / 20 µs" ist.

Die Stoßstromtragfähigkeit der gesamten Baugruppe wird demnach nicht durch das Überwachungsmodul, insbesondere den Überlastschutz des Überwachungsmoduls, beeinträchtigt bzw. reduziert. Vielmehr entspricht die Stoßstromtragfähigkeit der Baugruppe den Nennparametern des zu schützenden Überspannungsschutzmoduls, da die Stoßstromtragfähigkeit nicht vom Nennstrom einer vorgeschalteten Sicherung begrenzt wird.

Das Überwachungsmodul kann ferner eine Triggereinrichtung aufweisen, die mit einem Triggereingang des Überlastschutzes verbunden ist. Über die Triggereinrichtung kann der Überlastschutz getriggert werden, um entsprechend auszulösen, insbesondere die Funkenstrecke getriggert bzw. aktiv gezündet werden, sofern eine Triggerbedingung erfüllt ist.

Die Triggereinrichtung kann einen ansteuerbaren Aktor aufweisen, der eingerichtet ist, als (mechanischer) Schalter zu fungieren und/oder eine Geometrieveränderung des Überlastschutzes vorzunehmen. Über den Schalter kann die Triggereinrichtung abgeschaltet werden, sodass eine Triggerung des Überlastschutzes nicht mehr erfolgt. Insofern bietet der Überlastschutz nur noch eine Notlaufeigenschaft. Die Notlaufeigenschaft kann eine Folgestromlöschfähigkeit umfassen, was vom Überlastschutz noch gewährleistet wird, insbesondere der Funkenstrecke. Über die Geometrieveränderung lässt sich eine Spannungsfestigkeit des Überwachungsmoduls verändern, insbesondere des Überlastschutzes. Die Spannungsfestigkeit kann also aktiv eingestellt werden. Insbesondere wird der Überlastschutz hierdurch an den Zustand des Überspannungsschutzmoduls angepasst. Grundsätzlich kann es sich bei der Triggereinrichtung um eine Triggerschaltung handeln.

Gemäß einem weiteren Aspekt weist das Überwachungsmodul eine Statusanzeige und/oder eine Kommunikationsschnittstelle auf. Über die Statusanzeige, welche bspw. eine Leuchte wie eine LED aufweist, kann der Zustand des Überwachungsmoduls und/oder des Überspannungsschutzmoduls angezeigt werden. Die Statusanzeige kann auch durch einen Bildschirm ausgebildet sein.

Alternativ oder ergänzend zur Statusanzeige, die am Überwachungsmodul angeordnet ist, insbesondere an einem Gehäuse des Überwachungsmoduls, kann eine Kommunikationsschnittstelle vorgesehen sein, über die eine Zustandsinformation an ein separat ausgebildetes Gerät übermittelt wird, an dem der Status des Überspannungsschutzmoduls und/oder der Status des Überwachungsmoduls angezeigt wird.

Des Weiteren kann ein Entkopplungselement zur Entkopplung von anliegenden Netz- und/oder Impulsspannungen vorgesehen sein. Hierdurch erhöht sich die Betriebssicherheit des Überwachungsmoduls entsprechend.

Gemäß einem Aspekt ist beim Überspannungsschutzsystem also vorgesehen, dass die Brückenschaltung über den ersten Anschluss und den zweiten Anschluss derart mit dem Überspannungsschutzmodul verbunden ist, das ein Spannungsabfall über das Spannungsschutzmodul abgreifbar ist. Die Auswerteeinheit ist eingerichtet, den Spannungsabfall über das Überspannungsschutzmodul auszuwerten, insbesondere wobei die Auswerteeinheit eingerichtet ist, den Spannungsabfall über das Überspannungsschutzmodul mit einem Schwellenwert für das Überspannungsschutzmodul zu vergleichen. Die Brückenschaltung stellt demnach sowohl den Spannungsabfall über den Überlastschutz des Überwachungsmoduls als auch den Spannungsabfall über das Überspannungsschutzmodul der Auswerteeinheit zur Verfügung. Wie vorstehend erläutert, kann der Degradationsgrad des Überspannungsschutzmoduls mittels der Auswerteeinheit festgestellt werden.

Gemäß einer Ausführungsform kann das Überspannungsschutzsystem ein Schutzgerät aufweisen, das das Überspannungsschutzmodul und das Überwachungsmodul umfasst. Mit anderen Worten besteht das Überspannungsschutzsystem aus einem einzelnen Gerät, nämlich dem Schutzgerät, in dem neben dem Überspannungsschutzmodul auch das Überwachungsmodul integriert ist. Das Überwachungsmodul wird auch als kombiniertes Abtrennmodul ("combined disconnector" - CD) bezeichnet, da es die Abtrennfunktionalität sowie die Überlast- und Kurzschlussfunktionalität umfasst. Das Überspannungsschutzmodul kann dann generell auch als Überspannungsschutzkomponente ("surge protection component" - SPC) bezeichnet werden. Das Schutzgerät kann als Überspannungsschutzgerät bezeichnet werden, da die Hauptfunktion der Überspannungsschutz ist.

Gemäß einer alternativen Ausführungsform kann das Überspannungsschutzsystem ein Überspannungsschutzgerät, das das Überspannungsschutzmodul umfasst, und einen zum Überspannungsschutzgerät separat ausgebildetes Überwachungsgerät aufweisen, das das Überwachungsmodul umfasst. Mit anderen Worten besteht das Überspannungsschutzsystem aus zwei separat ausgebildeten Geräten, nämlich dem Überspannungsschutzgerät ("surge protection device" - SPD) und dem Überwachungsgerät, die miteinander verbunden sind. Insbesondere sind das Überwachungsgerät und das Überspannungsschutzgerät derart miteinander verbunden, dass der Überlastschutz des Überwachungsmoduls mit dem Überspannungsschutzmodul in Reihe geschaltet ist. Das Überwachungsgerät kann auch als ein Überspannungsschutzgerät-spezifisches Trenngerät ("SPD specific disconnector" - SSD) bezeichnet werden.

Grundsätzlich ist das erfindungsgemäße Überspannungsschutzsystem sowohl für Wechselspannung als auch für Gleichspannung geeignet.

Ebenso kann das Überspannungsschutzsystem an verschiedene Netzformen angepasst werden, wobei sich entsprechend unterschiedliche Anschlussschemata ergeben. Beispielsweise kann eine Verbindung des Neutralleiters (N-Leiter) zwischen dem Überwachungsgerät und dem Überspannungsschutzgerät bestehen.

Generell ergibt sich mit dem Überwachungsmodul und dem Überspannungsschutzsystem ein zuverlässiger Schutz für das Überspannungsschutzmodul bei Strömen in der Größenordnung von Milliampere bis zum maximalen Kurzschlussstrom am Einbauort.

Die Stoßstromtragfähigkeit des Überspannungsschutzsystems, also der SSD/CD-SPD/SPC-Kombination, entspricht den Nennparametern des zu schützenden Überspannungsschutzmoduls, da die Stoßstromtragfähigkeit nicht vom Nennstrom einer vorgeschalteten Sicherung begrenzt wird.

Das Überspannungsschutzsystem stellt auch bei einem bereits detektieren Lebensdauerende des Überspannungsschutzmoduls im Überspannungsfall noch Notlaufeigenschaften bereit, da eine Folgestromlöschfähigkeit gegeben ist, die vom Überlastschutz des Überwachungsmoduls übernommen wird, insbesondere der Funkenstrecke des Überlastschutzes.

Weitere Vorteile und Eigenschaften der Erfindung ergeben sich aus der nachfolgenden Beschreibung und den Zeichnungen, auf die Bezug genommen wird. In den Zeichnungen zeigen:
- Figur 1 eine schematische Darstellung eines erfindungsgemäßen Überspannungsschutzsystems gemäß einer ersten Ausführungsform,
- Figur 2 eine schematische Darstellung eines erfindungsgemäßen Überspannungsschutzsystems gemäß einer zweiten Ausführungsform, und
- Figur 3 eine schematische Übersicht von verschiedenen Anschlussmöglichkeiten des Überspannungsschutzsystems.

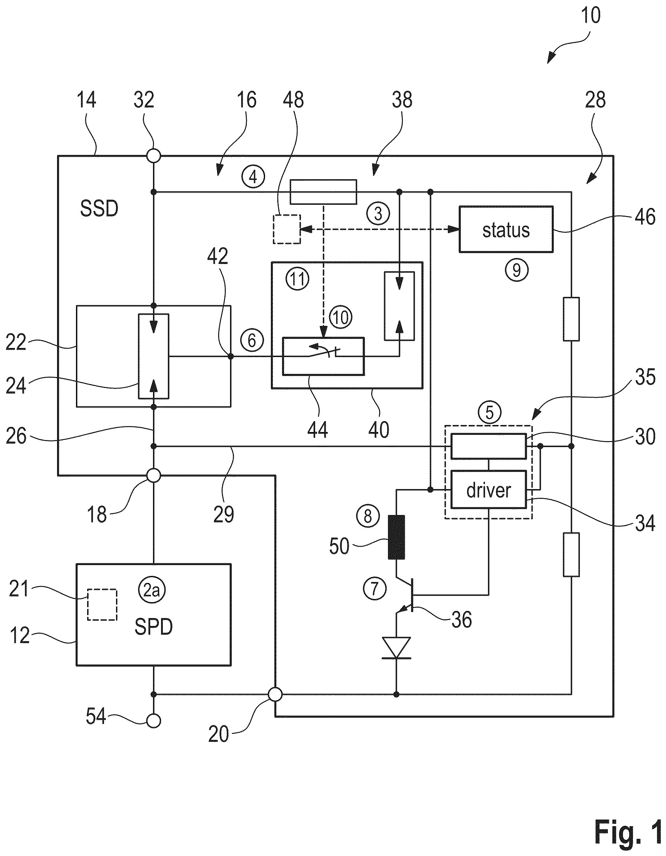

In Figur 1 ist ein Überspannungsschutzsystem 10 gezeigt, das ein Überspannungsschutzgerät 12 ("surge protection device" - SPD) sowie ein Überwachungsgerät 14 ("SPD specific disconnector" - SSD) umfasst, das separat zum Überspannungsschutzgerät 12 ausgebildet ist.

Mit anderen Worten besteht das Überspannungsschutzsystem 10 in der gezeigten Ausführungsform aus zwei separat ausgebildeten Geräten, nämlich dem Überspannungsschutzgerät 12 (SPD) und dem Überwachungsgerät 14 (SSD), die jeweils ein eigenständiges Gehäuse aufweisen.

Das Überwachungsgerät 14 weist ein Überwachungsmodul 16 auf, das vom Gehäuse des Überwachungsmoduls 16 umgeben ist. Das Überwachungsmodul 16 umfasst einen ersten Anschluss 18 sowie einen zweiten Anschluss 20, die außenseitig am Gehäuse des Überwachungsmoduls 16 vorgesehen sein können, sodass diese leicht kontaktierbar sind.

Über die Anschlüsse 18, 20 ist das Überwachungsmodul 16 mit dem Überspannungsschutzgerät 12 verbunden, das ein Überspannungsschutzmodul 21 aufweist, welches vom Gehäuse des Überspannungsschutzgeräts 12 umgeben ist. Insbesondere ist der erste Anschluss 18 stromaufwärts und der zweite Anschluss 20 stromabwärts in Bezug auf eine Stromrichtung im aktiven Zustand des Überspannungsschutzgeräts 12 vorgesehen.

Das Überwachungsmodul 16 hat zudem einen Überlastschutz 22, der eine Funkenstrecke 24 umfasst, wobei der Überlastschutz 22 über eine Leitung 26 mit dem ersten Anschluss 18 verbunden ist, sodass der Überlastschutz 22 und das Überspannungsschutzgerät 12 in Reihe geschaltet sind.

Ferner weist das Überwachungsmodul 16 eine Brückenschaltung 28 auf, die einen Abgriff 29 aufweist, welcher von der Leitung 26 zu einer Auswerteeinheit 30 führt, die über die Brückenschaltung 28 mit dem zweiten Anschluss 20 sowie einem Eingang 32 des Überwachungsgeräts 14 in Verbindung steht.

Die Auswerteeinheit 30 kann mittels der Brückenschaltung 28 eine Spannungsaufteilung über die Reihenschaltung von Überlastschutz 22 und dem Überspannungsschutzmodul 21, insbesondere dem Überspannungsschutzgerät 12, erfassen und auswerten.

Insofern ist die Auswerteeinheit 30 eingerichtet, einen Spannungsabfall über den Überlastschutz 22 des Überwachungsmoduls 16 und/oder ein Spannungsabfall über das Überspannungsschutzmodul 21, also zwischen dem ersten Anschluss 18 und dem zweiten Anschluss 20 des Überwachungsmoduls 16, zu erfassen und auszuwerten.

Dabei kann die Auswerteeinheit 30 den entsprechend detektierten Spannungsabfall mit einem zugeordneten Schwellenwert vergleichen, um festzustellen, ob der vordefinierte Schwellenwert erreicht bzw. überschritten worden ist. Hierüber lässt sich beispielsweise ein Degradationsgrad des Überspannungsschutzmoduls 21 feststellen. Insbesondere können mehrere vordefinierte Schwellenwerte vorgesehen sein, um den Degradationsgrad des Überspannungsschutzmoduls 21 möglichst genau zu bestimmen.

Das Überspannungsschutzmodul 21, insbesondere das Überspannungsschutzgerät 12, kann also von dem Überwachungsmodul 16, insbesondere dem Überwachungsgerät 14, überwacht werden. Mit anderen Worten erfolgt ein "Monitoring" des Überwachungsmoduls 16, insbesondere des Überwachungsgeräts 14, also ein "SPD-Monitoring".

Die Auswerteeinheit 30 ist zudem mit einer Steuereinheit 34 signalübertragend verbunden, die als Treiber ("driver") ausgebildet ist. Grundsätzlich kann die Auswerteeinheit 30 und die Steuereinheit 34 durch ein gemeinsames Auswerte- und Steuermodul 35 ausgebildet sein.

Die Steuereinheit 34 erhält von der Auswerteeinheit 30 ein Auswerteergebnis, wobei in Abhängigkeit des Auswerteergebnisses der Auswerteeinheit 30 ein Auslöseschalter 36 von der Steuereinheit 34 aktiv angesteuert wird. Vorliegend ist der Auslöseschalter 36 als Transistor ausgebildet.

Sofern der Auslöseschalter 36 angesteuert worden ist, kann eine leitende Verbindung hergestellt werden, die zur Folge hat, dass eine Auslöseeinrichtung 38 auslöst. Die Auslöseeinrichtung 38 kann eine Sicherung umfassen, wie dies in Figur 1 dargestellt ist.

Die Auslöseeinrichtung 38 ist mit einer Triggereinrichtung 40 verbunden, die zur Triggerung des Überlastschutzes 22 dient, insbesondere der Funkenstrecke 24. Hierzu kann der Überlastschutz 22 einen Triggereingang 42 aufweisen, über den ein Triggersignal von der Triggereinrichtung 40 empfangen wird.

Die Triggereinrichtung 40 kann einen ansteuerbaren Aktor 44 aufweisen, der entsprechend angesteuert wird.

Hierbei kann der Aktor 44 als mechanischer Schalter fungieren, um die Triggereinrichtung 40 zu deaktivieren, sodass keine Triggerfunktionalität mehr vorhanden ist.

Alternativ oder ergänzend kann über den ansteuerbaren Aktor 44 eine Geometrieveränderung des Überlastschutzes 22 vorgenommen werden, wodurch sich das Ansprechverhalten verändert. Insbesondere lässt sich so das Ansprechverhalten an den Degradationsgrad des Überspannungsschutzmoduls 21 anpassen, welcher zuvor festgestellt worden ist.

Zudem kann das Überwachungsmodul 16 eine Statusanzeige 46 aufweisen, die zumindest eine Lichtquelle wie eine LED umfasst. Alternativ kann die Statusanzeige 46 ein Bildschirm sein. Mit der Statusanzeige 46 kann der Zustand des Überwachungsmoduls 16 und/oder des Überspannungsschutzmoduls 21 angezeigt werden. Hierzu kann die Statusanzeige 46 in einfacher Weise mit der Auslöseeinrichtung 38 verbunden sein, sodass die Statusanzeige 46 den Status anzeigt, wenn die Auslöseeinrichtung 38 ausgelöst hat bzw. die Auswerteeinheit 30 ein entsprechendes Auswerteergebnis festgestellt hat. Insbesondere ist es mit der Statusanzeige 46 aber auch möglich, den Zustand dauerhaft anzuzeigen und nicht nur beim Vorliegen eines bestimmten Zustands, indem zunächst ein nicht ausgelöster Zustand ("OK" oder grünes Licht) angezeigt wird, was sich beim Auslösen der Auslöseeinrichtung 38 verändert ("NOT OK" oder rotes Licht).

Alternativ oder ergänzend kann das Überwachungsmodul 16 eine Kommunikationsschnittstelle 48 aufweisen, worüber Status- bzw. Zustandsinformationen an ein separat ausgebildetes Gerät übermittelt werden können. In dem Fall ist eine Statusanzeige 46 nicht erforderlich und der Zustand bzw. Status des Überwachungsmoduls 16 und/oder des Überspannungsschutzmoduls 21 lässt sich auch entfernt vom Überwachungsmodul 16 und/oder Überspannungsschutzmodul 21 feststellen.

Zudem umfasst das Überwachungsmodul 16 in der gezeigten Ausführungsform ein Entkopplungselement 50, welches stromaufwärts in Bezug auf den Auslöseschalter 36 angeordnet ist. Mit dem Entkopplungselement 50 kann das Überwachungsmodul 16, insbesondere die Brückenschaltung 28, von anliegenden Netz- und/oder Impulsspannungen entkoppelt werden.

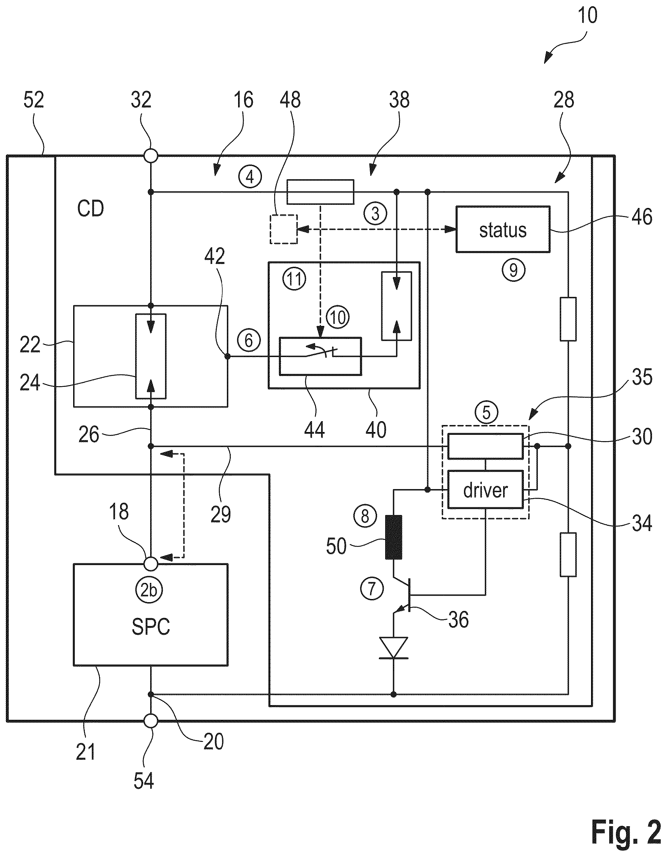

In Figur 2 ist eine alternative Ausführungsform des erfindungsgemäßen Überspannungsschutzsystems 10 gezeigt, das sich von der ersten Ausführungsform dahingehend unterscheidet, dass ein einziges Schutzgerät 52 vorgesehen ist, in dem sowohl das Überspannungsschutzmodul 21 als auch das Überwachungsmodul 16 integriert sind.

Das Schutzgerät 52 kann auch als Überspannungsschutzgerät bezeichnet werden, da es vornehmlich die Funktion des Überspannungsschutzes hat. Zusätzlich bietet das Schutzgerät 52 aufgrund des Überwachungsmoduls 16 aber noch weitere Funktionalitäten, beispielsweise eine Anzeige- und/oder Deaktivierungsfunktion sowie eine Überlast- bzw. Kurzschlussschutzfunktion.

Der erste Anschluss 18 des Überwachungsmoduls 16 kann demnach am Eingang des Überspannungsmoduls 21 vorgesehen sein, wie dies in Figur 2 dargestellt ist. Alternativ kann der erste Anschluss 18 des Überwachungsmoduls 16 zwischen dem Eingang des Überspannungsschutzmoduls 21 und dem Knotenpunkt vorgesehen sein, an dem der Abgriff 29 die Leitung 26 kontaktiert, wie dies in Figur 2 durch den Pfeil angedeutet ist.

Der zweite Anschluss 20 kann zwischen einem Ausgang des Überspannungsschutzmoduls 21 und einem Abgang 54 vorgesehen sein.

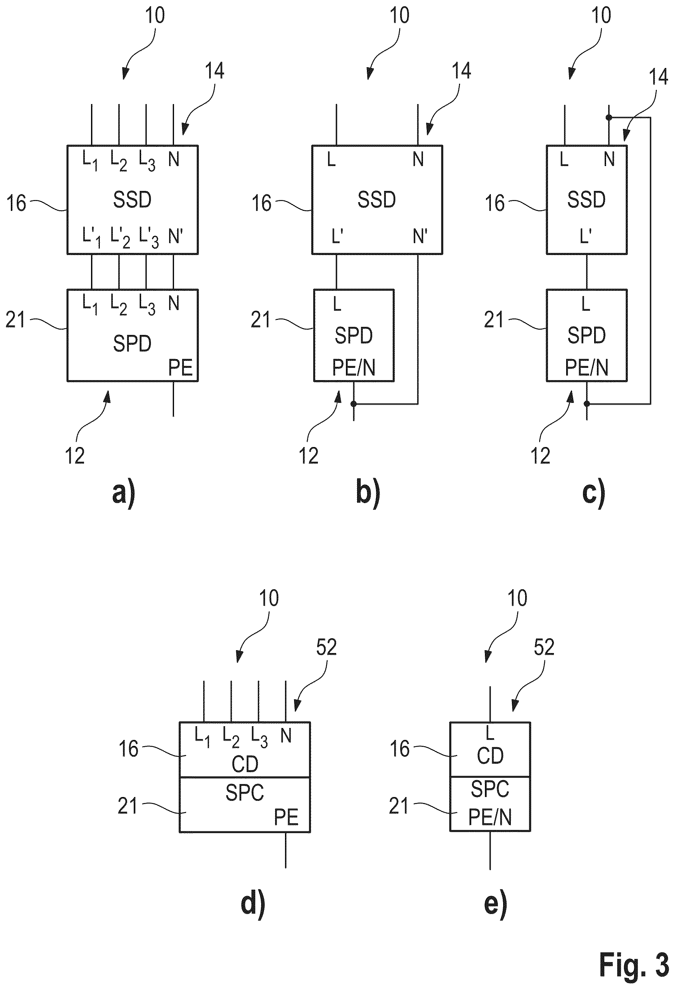

In den Figuren 3a - 3e sind verschiedene Anschlussszenarien für das Überspannungsschutzsystem 10 dargestellt.

In Figuren 3a - 3c umfasst das Überwachungsschutzsystem 10 zwei separat ausgebildete Geräte, wie dies in Figur 1 dargestellt ist, wohingegen in den Darstellungen der Figuren 3d und 3e lediglich ein Gerät vorgesehen ist, das beide Module 16, 21 umfasst.

Für eine bestimmungsgemäße Funktion ist es sinnvoll, den Neutralleiter (N-Leiter) an das Überwachungsmodul 16 anzuschließen.

Der Anschluss an den Neutralleiter (N-Leiter) kann jedoch entfallen, wenn das Überspannungsschutzmodul 21 einen Zustand am Lebensdauerende erreicht, der niederohmig genug ist, um im Detektionsfall zu einem netzgetriebenen Strom über die Auslöseeinrichtung 38, das Entkopplungselement 50 und den Auslöseschalter 36 führt, der die Auslöseeinrichtung 38 auslöst.

Ansonsten kann die Verbindung zwischen dem Überwachungsmodul 16 und dem Überspannungsschutzmodul 21, insbesondere zwischen dem Überspannungsschutzgerät 12 und dem Überwachungsgerät 14, auf unterschiedliche Weise erfolgen, wie aus den Figuren 3a - 3c deutlich wird.

## Patentansprüche

1. Überwachungsmodul (16) zur Überwachung eines Überspannungsschutzmoduls (21), wobei das Überwachungsmodul (16) einen ersten Anschluss (18) und einen zweiten Anschluss (20) für das Überspannungsschutzmodul (21) aufweist, wobei das Überwachungsmodul (16) einen Überlastschutz (22) hat, der mit dem ersten Anschluss (18) über eine Leitung (26) verbunden und über den ersten Anschluss (18) mit dem Überspannungsschutzmodul (21) in Reihe schaltbar ist, wobei das Überwachungsmodul (16) eine Brückenschaltung (28) zur Spannungserfassung umfasst, wobei das Überwachungsmodul (16) eine Auswerteeinheit (30) aufweist, die über einen Abgriff (29) der Brückenschaltung (28) mit der Leitung (26) verbunden ist, um einen Spannungsabfall über den Überlastschutz (22) und/oder einen Spannungsabfall zwischen dem ersten Anschluss (18) und dem zweiten Anschluss (20) zu erfassen und auszuwerten.

2. Überwachungsmodul (16) nach Anspruch 1, **dadurch gekennzeichnet, dass** die Auswerteeinheit (30) eingerichtet ist, den Spannungsabfall mit einem Schwellenwert zu vergleichen und/oder eine Degradation des Überspannungsschutzmoduls (21) zu bestimmen.

3. Überwachungsmodul (16) nach Anspruch 1 oder 2, **dadurch gekennzeichnet, dass** das Überwachungsmodul (16) eine Steuereinheit (34) aufweist, die in Abhängigkeit eines Auswerteergebnisses der Auswerteeinheit (30) einen Auslöseschalter (36) des Überwachungsmoduls (16) aktiv ansteuert.

4. Überwachungsmodul (16) nach Anspruch 3, **dadurch gekennzeichnet, dass** das Überwachungsmodul (16) eine Auslöseeinrichtung (38) aufweist, die auslöst, wenn der Auslöseschalter (36) angesteuert worden ist.

5. Überwachungsmodul (16) nach einem der vorhergehenden Ansprüche, **dadurch gekennzeichnet, dass** der Überlastschutz (22) eine Funkenstrecke (24) aufweist.

6. Überwachungsmodul (16) nach einem der vorhergehenden Ansprüche, **dadurch gekennzeichnet, dass** das Überwachungsmodul (16) eine Triggereinrichtung (40) aufweist, die mit einem Triggereingang (42) des Überlastschutzes (22) verbunden ist.

7. Überwachungsmodul (16) nach Anspruch 6, **dadurch gekennzeichnet, dass** die Triggereinrichtung (40) einen ansteuerbaren Aktor (44) aufweist, der eingerichtet ist, als Schalter zu fungieren und/oder eine Geometrieveränderung des Überlastschutzes (22) vorzunehmen.

8. Überwachungsmodul (16) nach einem der vorhergehenden Ansprüche, **dadurch gekennzeichnet, dass** das Überwachungsmodul (16) eine Statusanzeige (46) aufweist.

9. Überwachungsmodul (16) nach einem der vorhergehenden Ansprüche, **dadurch gekennzeichnet, dass** das Überwachungsmodul (16) eine Kommunikationsschnittstelle (48) aufweist.

10. Überwachungsmodul (16) nach einem der vorhergehenden Ansprüche, **dadurch gekennzeichnet, dass** ein Entkopplungselement (50) zur Entkoppelung von anliegenden Netz- und/oder Impulsspannungen vorgesehen ist.

11. Überspannungsschutzsystem (10) mit einem Überspannungsschutzmodul (21) und dem Überwachungsmodul (16) nach einem der vorhergehenden Ansprüche, wobei das Überspannungsschutzmodul (21) mit dem ersten Anschluss (18) und dem zweiten Anschluss (20) verbunden ist, und wobei das Überspannungsschutzmodul (21) mit dem Überlastschutz (22) in Reihe geschaltet ist.

12. Überspannungsschutzsystem (10) nach Anspruch 11, **dadurch gekennzeichnet, dass** die Brückenschaltung (28) über den ersten Anschluss (18) und den zweiten Anschluss (20) derart mit dem Überspannungsschutzmodul (21) verbunden ist, dass ein Spannungsabfall über das Überspannungsschutzmodul (21) abgreifbar ist, wobei die Auswerteeinheit (30) eingerichtet ist, den Spannungsabfall über das Überspannungsschutzmodul (21) auszuwerten.

13. Überspannungsschutzsystem (10) nach Anspruch 12, **dadurch gekennzeichnet, dass** die Auswerteeinheit (30) eingerichtet ist, den Spannungsabfall über das Überspannungsschutzmodul (21) mit einem Schwellenwert zu vergleichen.

14. Überspannungsschutzsystem (10) nach einem der Ansprüche 11 bis 13, **dadurch gekennzeichnet, dass** das Überspannungsschutzsystem (10) ein Schutzgerät (52) aufweist, das das Überspannungsschutzmodul (21) und das Überwachungsmodul (16) umfasst.

15. Überspannungsschutzsystem (10) nach einem der Ansprüche 11 bis 13, **dadurch gekennzeichnet, dass** das Überspannungsschutzsystem (10) ein Überspannungsschutzgerät (12), das das Überspannungsschutzmodul (21) umfasst, und ein zum Überspannungsschutzgerät (12) separat ausgebildetes Überwachungsgerät (14) aufweist, das das Überwachungsmodul (16) umfasst.
